# EUROPÄISCHE PATENTSCHRIFT

(11) **EP 2 079 780 B1**
(45) Veröffentlichungstag und Bekanntmachung des Hinweises auf die Patenterteilung: **06.01.2010**
(21) Anmeldenummer: 07817674.0
(22) Anmeldetag: 11.10.2007
(51) Int. Cl.: C08J 5/00

(54) **HAFTVERMITTLERSCHICHT FÜR DIE VERBINDUNG EINES HOLOGRAPHISCHEN DATENTRÄGERS MIT EINEM SUBSTRAT.**
ADHESION PROMOTER LAYER FOR BONDING A HOLOGRAPHIC DATA STORAGE MEDIUM TO A SUBSTRATE
COUCHE DE PROMOTEUR D'ADHÉRENCE POUR ASSEMBLER UN SUPPORT DE DONNÉES HOLOGRAPHIQUES SUR UN SUBSTRAT

(30) Priorität: 11.10.2006 DE 102006048464
(43) Veröffentlichungstag der Anmeldung: 22.07.2009
(73) Patentinhaber: Bundesdruckerei GmbH, 10958 Berlin (DE)
(72) Erfinder: MUTH, Oliver, 12277 Berlin (DE); LEOPOLD, André, 10119 Berlin (DE); BEYER-MEKLENBURG, Günter, 16816 Neuruppin (DE); SCHNEIDER, Jürgen, 14513 Teltow (DE); BAUER, Monika, 15754 Senzig (DE)
(74) Vertreter: Jungblut, Bernhard Jakob
(86) Internationale Anmeldenummer: PCT/DE2007/001839
(87) Internationale Veröffentlichungsnummer: WO 2008/043356

(56) Entgegenhaltungen:
- DE-A1-102005 007 663

## Beschreibung

### Gebiet der Erfindung.

Die Erfindung betrifft eine Haftvermittlerschicht, welche ein Polymer aus ethylenisch ungesättigten Monomeren mit Gruppen, welche mit Expoxidgruppen reaktiv sind, sowie ein Monomer mit im Mittel mehr als einer Epoxidgruppe enthält. Die Erfindung betrifft des weiteren ein Verfahren zu deren Herstellung, ein Verfahren zur Verbindung eines Aufsatzelementes mit einem Substrat, einen Verbund mit einem mit dem Substrat verklebten Aufsatzelement und insbesondere ein Sicherheits- und/oder Wertdokument, welches eine solche Haftvermittlerschicht enthält.

### Stand der Technik und Hintergrund der Erfindung.

Deutsche Personaldokumente werden über ein individualisiertes Volumenhologramm abgesichert. Zukünftig sind national wie international u.a. Dokumente auf Polycarbonat (PC)-basis gefordert, welches wiederum andere Ansprüche an die bis dato praktizierte Einbringung des Volumenhologramms stellt.

Aus der Literaturstelle DE 10 2004 012 787 A1 ist es bekannt, das vereinzelte Volumenhologram vor der Laminierung in den PC-Schichtaufbau einzulegen und mit oder ohne Haftvermittler zu laminieren. Die Einlaminierung des Volumenhologramms in PC-Aufbauten hat dabei den Vorteil, dass es innen liegend in das Dokument eingebaut ist und gegen äußere Umwelteinflüsse wie aber auch Manipulationsversuche geschützt ist. Als Nachteil erweisen sich jedoch die niedrigere visuelle Qualität infolge der angewendeten Drücke, das Volumenhologramm wirkt unscharf. Auch aus Sicherheitsgründen (ein Datenträger wird durch ein individualisiertes Volumenhologramm zum Personaldokument) ist eine Einbringung bzw. Applizierung möglichst am Ende der Produktionskette wünschenswert. Hierzu ist es erforderlich, das Volumenhologramm mittels einer Haftvermittlerschicht auf dem Substrat zu verkleben.

Polymere Bindemittelsysteme bzw. Haftvermittlerzubereitungen sind vielfältig bekannt. Hierunter bilden Systeme eine Untergruppe, bei welcher zwei verschiedene Poylmerisationsreaktionen letztendlich zu der vernetzten Klebeverbindung führen, die sogenannten "Dualmechanismus"-Klebstoffe. Diese lassen sich wiederum in zwei Untergruppen unterteilen.

Eine erste Untergruppe umfasst Mischungen von Epoxidharzen mit ethylenischen (doppelbindungshaltigen), photopolymerisierbaren Monomeren. Die Besonderheit des Reaktionsmechanismus' dieser Gruppe besteht darin, dass zwei auf Basis unterschiedlicher Mechanismen der Polymeraufbaureaktion reagierende Monomer-/Oligomerarten (Acrylatmonomere und Epoxidharze) kombiniert werden. Die Acrylatmonomere stellen dabei ein reaktives Lösungsmittel für das Epoxidharz dar. Die UV-Polymerisation der Acrylate führt zu einer schmelzbaren Mischung aus dem entstandenen Polyacrylat und Epoxidharz. Bei nachfolgender Wärmezufuhr kommt es zur Reaktion des Epoxidharzes mit funktionellen Gruppen im Polyacrylat und es entsteht die gewünschte vernetzte und damit unlösliche, nicht mehr schmelzbare Kleberschicht. Ein System dieser Gruppe ist insbesondere in der Literaturstelle EP0 858 725 beschrieben. Diese betrifft ein licht- und hitzehärtendes Grundbeschichtungsmittel inkl. reaktiven Verdünnungsmittels (ethylenische Monomere, z.B. Acrylate) zur Beschichtung und Fügung von Leiterplatten. Dieses Grundbeschichtungsmittel "klebt" allerdings nicht allein, sondern nur im Zusammenwirken mit einem thermisch härtenden, isolierenden Klebstoff. Die Beschichtung der Leiterplatten erfolgt im Siebdruck. In der Literaturstelle WO 2002/077059 wird ein Verfahren zur Herstellung von klebfreien Prepregs bzw. Kaschierfolien mit einem dualhärtenden Bindemittelgemisch beschrieben. Der Aushärtemechanismus besteht aus einer Photopolymerisation zu einer klebfreien Schicht (Zustand B) und einer thermisch initiierten Endaushärtung. Die Aufbringung erfolgt durch Imprägnierung (Prepregs) bzw. Rakeln (Kaschierfolien). Zu den eingesetzten Monomeren dieser Dokumente des Standes der Technik ist festzuhalten, dass epoxidgruppenhaltige Acrylate und Methacrylate als funktionelle Reaktivverdünner verwendet werden, welche dann in einem zweiten, thermisch initiierten Reaktionsschritt in den klassischen Vernetzungsmechanismus des Epoxidharzes einbezogen werden. Die Epoxidgruppen sind also in beiden Komponenten, Polyacrylat und Epoxidharz, vorhanden. Nachteilig bei diesen Haftvermittlerschichten ist, dass sie nicht im Wege des Offset- bzw. Letterset-Druckverfahrens erzeugt werden können, was im Zusammenhang mit Sicherheits- und/oder Wertdokumenten wünschenswert ist. Beim Stand der Technik handelt es sich um komplexe, hochgefüllte Mischungen, die sich in aller Regel nur rakeln oder im Siebdruck aufbringen lassen, da dort das Material in großen Schichtstärken > 5 µm - 50 µm appliziert wird. Diese Verfahren sind sehr tolerant gegenüber großen, nicht löslichen Partikeln (15 - 90 µm), aber mit hohem Materialverbrauch und meist geringerer Geschwindigkeit sowie eingeschränkter Passgenauigkeit verbunden.

Eine zweite Gruppe ist durch die Epoxidgruppen-basierten Klebstoffe gebildet, die alternativ oder sequentiell kationisch durch Photo-Polymerisation vernetzt werden können. Ein Beispiel für solche Dual-Systeme ist in der Literaturstelle EP 1 061 101 B1 beschrieben. Der Klebstoff umfasst (Meth-)Acrylate, welche ausschließlich über Epoxidgruppen reagieren und sowohl photonisch als auch thermisch anregbar sind. Die Anwendungsrichtung sind Klebstoffe, die unter UV-Strahlung vorvernetzt und dann nach Fügen thermisch endvernetzt werden. Hier liegt ein (einziger) Reaktionstyp (Epoxidvernetzung) vor, der zu unterschiedlichen Zeitpunkten / Zuständen / Vemetzungsgraden angehalten bzw. fortgeführt werden kann. Die klebfreie Zwischenstufe (Zustand B) ist nur bei exakter Einhaltung an UV-Initiator, Strahlungsdosis und Umgebungstemperatur zu realisieren. Somit ergibt sich ein enges "Verarbeitungsfenster". Für die Verklebung von Volumenhologrammen mit Substraten von Sicherheits- und/oder Wertdokumenten sind solche Systeme nicht geeignet, da sie nicht einerseits gleichsam als "Druckfarbe" und andererseits als Haftvermittler funktionieren können. Der Zustand B ist insofern nicht hinreichend reproduzierbar und tolerant gegenüber Reaktionsparametern für eine industrielle Verwendung im Rahmen des Offset- oder Lettersetdruckes, wie für Sicherheits- und/oder Wertdokumente zweckmäßig.

Gewöhnliche, aus der Praxis bekannte zweistufige Reaktivklebstoffe auf der Basis von Epoxidharzen beinhalten eine thermische initiierte Vorvernetzung und eine, meist bei höherer Temperatur, finale Aushärtung/Endvernetzung (und damit nur einen Reaktionsmechnismus).

### Technisches Problem der Erfindung.

Der Erfindung liegt daher das technische Problem zu Grunde, eine Haftvermittlerschicht anzugeben, die mittels der Drucktechnologien Offsetdruck, Lettersetdruck, Flexodruck und Rastertiefdruck herstellbar und thermisch vernetzbar ist.

### Grundzüge der Erfindung und bevorzugte Ausführungsformen.

Zur Lösung dieses technischen Problems lehrt die Erfindung eine thermisch vernetzbare, feste Haftvermittlerschicht, welche dadurch erhältlich ist, dass
A) eine flüssige Zubereitung bestehend aus
   a) 19,9 - 80 Gew.-% eines mit den Komponenten b), c) und d) copolymerisierbaren und von diesen verschiedenen ethylenisch ungesättigten Monomers ohne eine mit Epoxidgruppen reaktive funktionelle Gruppe, oder einer Mischung verschiedener solcher Monomere
   b) 0,1 - 60,2 Gew.-% eines mit den Komponenten a), c) und d) copolymerisierbaren und von diesen verschiedenen ethylenisch ungesättigten Monomers mit zumindest einer mit Epoxidgruppen reaktiven funktionellen Gruppe, oder einer Mischung verschiedener solcher Monomere,
   c) 0 - 30 Gew.-% eines mit den Komponenten a), b) und d) copolymerisierbaren und von diesen verschiedenen ethylenisch ungesättigten Monomers mit einer Alkyoxygruppe, oder einer Mischung aus verschiedenen solcher Monomere,
   d) 0 - 5 Gew.-% eines mit den Komponenten a), b) und c) copolymerisierbaren und von diesen verschiedenen ethylenisch ungesättigten Monomers mit im Mittel zumindest zwei oder mehr als zwei mit Epoxidgruppen reaktiven funktionellen Gruppen, welches verschieden von der Komponente b) ist, oder einer Mischung aus verschiedenen solcher Monomere,
   e) 19,9 - 80 Gew.-% eines Monomers mit im Mittel zumindest einer Epoxidgruppe, insbesondere mehr als einer, beispielsweise im Mittel zumindest zwei Epoxidgruppen, oder einer Mischung aus verschiedenen solcher Monomere,
   f) 0 - 10 Gew.-% eines Photopolymerisationsinitiators oder mehrerer verschiedener Photopolymerisationsinitiators,
   g) 0 - 10 Gew.-% eines Vernetzungskatalysators oder mehrerer verschiedener Vernetzungskatalysatoren, und
   h) 0 - 15 Gew.-% Zusatzstoffe,
   wobei die Summe der Komponenten a) bis h) stets 100 Gew.-% ergibt, als Überzug auf ein Substrat aufgetragen wird, und
B) optional die Komponenten a) bis d) des in Stufe A) erhaltenen Überzugs durch Bestrahlung mit Licht photopolymerisiert werden. Es wird sich empfehlen, dass dafür zumindest 0,01 Gew.-% der Komponente f) in der Zubereitung enthalten ist.

Die Erfindung umfasst auch eine solche Zubereitung, wobei alle in Bezug auf die Haftvermittlerschicht und deren Aufbringung angebrachten Erläuterungen analog auf die Zubereitung übertragbar sind.

Die Zubereitung weist vorzugsweise eine Viskosität im Bereich von 10 bis 2000 mPa*s, insbesondere 100 bis 1000 mPa*s, beispielsweise 300 bis 700 mPa*s auf, insbesondere gemessen gemäß Beispiel 8.

Die Dicke der Haftvermittlerschicht (vor oder nach der Photopolymerisation) ist insbesondere kleiner als 5 µm, kleiner als 2 µm, oder kleiner als 1,5 µm, oder liegt im Bereich von 1 µm bis 30 µm, insbesondere von 1 µm bis 10 µm, vorzugsweise von 2 µm bis 6 µm.

Die Zubereitung wird vorzugsweise mittels einer Drucktechnologie, z.B. Offsetdruck, Lettersetdruck, Flexodruck oder Rastertiefdruck, auf das Substrat aufgetragen. Es ist aber auch möglich, dass die Zubereitung gerakelt, gecoatet, filmgegossen, gestrichen oder aufgesprüht wird, was auch dickere Schcihtdicken als 30 µm bewirken kann.

Die Komponente a) ist vorzugsweise ein (Meth-)Acrylat, vorzugsweise ein C1-C12-Alkyl-(meth-)acrylat, ein C1-C12-Aryl-(meth-)acrylat), oder ein C1-C12-Aralkyl-(meth-)acrylat, wobei die Alkylgruppe und/oder Arylgruppe substituiert oder nicht substituiert sein kann. Sie ist insbesondere ausgewählt ist aus der Gruppe bestehend aus "Methyl-, Ethyl-, Propyl-, Butyl-, Octyl-, Isobornyl-, 2-Ethyl-hexyl-(meth-)acrylat, Phenyl-(meth-)acrylat, Phenyl-C1-C8-alkyl-(meth-)acrylat und Mischungen solcher Monomere".

Die Komponente b) ist vorzugsweise eine (Meth-)Acrylsäure, substituiert oder nicht substituiert, ein C1-C12-Alkyl-(meth-)acrylat, ein C1-C12-Aryl-(meth-)-acrylat, oder ein C1-C12-Ar-alkyl-(meth-)acrylat, wobei die Alkylgruppe und/oder Arylgruppe mit zumindest einer mit Epoxidgruppen reaktiven Gruppe, insbesondere Hydroxylgruppe, Carboxylgruppe, Anhydridgruppe, Ketogruppe, oder Amingruppe (primär, sekundär, oder tertiär), substituiert ist. Sie ist insbesondere ausgewählt ist aus "(Meth-)Acrylsäure, Hydroxyethyl-, Hydroxypropyl-, Hydroxybutyl-(meth-)-acrylat, Carboxyethyl-, Carboxypropyl-, Carboxybuthyl-(meth-)acrylat, und Mischungen solcher Monomere".

Die Komponente c) ist vorzugsweise ein methoxyliertes oder ethoxyliertes C1-C12-Alkyl-(meth-)acrylat, C1-C12-Aryl-(meth-)acrylat oder C1-C12-Ar-alkyl-(meth-)acrylat, wobei die Alkylgruppe und/oder Arylgruppe substituiert oder nicht substituiert sein kann. Sie ist insbesondere ausgewählt ist aus der Gruppe bestehend aus "methoxyliertes Phenyl-(meth-)acrylat, methoxyliertes Phenyl-Methyl-(meth-)Acrylat, methoxyliertes Phenyl-ethyl-(meth-)acrylat, methoxyliertes Phenyl-butyl-(meth-)acrylat, methoxyliertes Phenyl-hexyl-(meth-)acrylat, methoxyliertes Phenyl-octyl-(meth-)acrylat, ethoxyliertes Phenyl-(meth-)acrylat, ethoxyliertes Phenyl-methyl-(meth-)acrylat, ethoxyliertes Phenyl-ethyl-(meth-)acrylat, ethoxyliertes Phenyl-butyl-(meth-)Acrylat, ethoxyliertes Phenyl-hexyl-(meth-)acrylat, ethoxyliertes Phenyl-octyl-(meth-)acrylat, und Mischungen solcher Monomere".

Die Komponente d) ist vorzugsweise ein (Meth-)Acrylat, beispielsweise ein C1-C12-Alkyl-(meth-) acrylat, ein C1-C12-Aryl-(meth-)acrylat), oder ein C1-C12-Aralkyl-(meth-)acrylat ist, wobei die Alkylgruppe und/oder Arylgruppe mit zwei oder drei Gruppen, gleich oder verschieden, substituiert ist, welche mit Epoxidgruppen reaktiv sind. Bezüglich geeigneter Gruppen wird auf die Ausführungen zur Komponente b) verwiesen. Beispiele geeigneter Produkte sind SR-9003 und SR-415 der Fa. Sartomer sowie Laromer®-DPGDA und Laromer®-LR 8863 der Fa. BASF.

Der Begriff des (Meth-)Acrylates bezeichnet Ester der (Meth-)Acrylsäure. Weitere für die Komponenten a) bis d) einsetzbare Monomere sind beispielsweise der Literaturstelle Ullmann's Encyclopedia of Industrial Chemistry, Wiley-VCH Verlag GmbH & Co. KGaA, 2005, in den Kapiteln "Acrylic Acid and Derivatives" und "Methacrylic Acid and Derivative" entnehmbar.

Die Komponente e) ist vorzugsweise ein Epoxidharz mit einem Molekulargewicht von zumindest 500 Da, vorzugsweise zumindest 1000 Da, insbesondere zumindest 2000 Da, bis zu 5000 Da und mehr. Der Begriff des "Monomers" der Komponente e) bezieht sich dann auf das gesamte Harzmolekül und nicht etwa auf Monomere, auf welchen das Harz basiert. Die Obergrenze des Molekulargewichtes ist lediglich dadurch bestimmt, dass das Epoxidharz in der eingesetzten Menge vollständig löslich in den anderen Komponenten ist. Es kommen grundsätzlich alle niedermolekulare sowie höhermolekulare Polymere in Frage, wobei sie zweckmäßigerweise im Mittel mehr als eine Epoxidgruppe pro Molekül enthalten. Bevorzugte Epoxide sind Polyglycidylether von cyclischen Polyphenolen, insbesondere von Bisphenol-A oder Bisphenol-F. Diese Polyepoxide können durch Veretherung eines Polyphenols mit einem Epihalogenhydrin oder einem Dihalogenhydrin, wie Epichlorhydrin oder Dichlorhydrin in Gegenwart von Alkali in an sich bekannter Weise hergestellt werden. Beispiele für Polyphenole sind: 2,2-Bis(4-hydroxyphenyl)propan, 1,1-Bis(4-hydroxyphenyl)ethan, 2-Methyl-1,1-bis(4-hydroxyphenyl)-propan, 2,2-Bis(4-hydroxy-3-tert.-butylphenyl)propan, Bis(2-hydroxynaphthyl)methan und 1,5-Dihydroxy-3-naphthalin. Beispiele für weitere cyclische Polyole sind cycloaliphatische Polyole, wie 1,2-Cyclohexandiol, 1,4-Cyclohexandiol, 1,2-Bis(hydroxymethyl)cyclohexan, 1,3-Bis(hydroxymethyl)cyclohexan, und hydriertes Bisphenol A. Darüber hinaus können oxyalkylierte Addukte, wie Ethylen- und Propylenoxidaddukte von diesen alicyclischen Polyolen und Polyphenolen verwendet werden. Weiterhin können als Epoxidharze eingesetzt werden: Polyglycidylether von mehrwertigen Alkoholen, wie beispielsweise Ethylenglykol, Diethylenglykol, Triethylenglykol, 1,2-Propylenglykol, 1,3-Propylenglykol, 1,4-Butylenglykol und 1,5-Pentandiol. Auch Epoxide, die man durch Epoxidierung einer olefinisch ungesättigten alicyclischen Verbindung erhält, sind als Epoxidharze einsetzbar. Derartige Epoxidharze schließen Diepoxide oder höhere Epoxide und deren Mischungen ein, die eine oder mehrere Monoepoxide enthalten. Diese Epoxide werden durch Epoxidierung von alicyclischen Olefinen erhalten, z.B. mit Sauerstoff und ausgewählten Metallkatalysatoren, mit Perverbindungen, wie beispielsweise Perbenzoesäure, mit Acetaldehydmonoperacetat, oder Peressigsäure. Beispiele für solche Epoxide sind 1,5-Diepoxycyclooctan und Isomere des Cyclopentadiendioxids. Ebenfalls eingesetzt werden können Epoxidharze, die durch partielle Epoxidierung von Polydienen und deren Copolymerisaten hergestellt sind. Beispiele sind teilepoxidiertes Polybutadien und Polyisopren. Weitere einsetzbare Epoxidharze sind Polygylcidylether von phenolischen Novolakharzen oder ähnlichen Phenolharzen. Geeignete Epoxidharze sind beispielsweise die unter folgenden Namen im Handel erhältlichen Produkte: Epon, Eponol, Eponex, Epi-Cure, Epikote (alle Resolution Performance Products), D.E.R., D.E.N., D.E.H., Derakane, E.R.L. (alle Dow Chemical), Araldite, Aralcast (beide Hunstman Advanced Materials), Epotuf (Reichhold Chemical), NPEL, NPES (beide Nan Ya), YD (Kukdo Chemical), Epiclon (Dainippon Ink & Chemical), Epotohto (Tohto Kasei), Epikote (Japan Epoxy Resin), Epilox (Leuna Harze), A.E.R. (Asahi Kasei), Eponik (Mitsui Chemical), Sumiepoxy (Sumimoto Chemical), Epotec (Thai Epoxy), Paphen (InChem), PEP (Pacific Epoxy Polymers), oder Erysis, Epalloy (CVC Speciality Chemicals).

Die Komponente e) ist zweckmäßigerweise in einer Mischung der Komponenten a) bis d) vollständig löslich. Hierzu können die Verhältnisse der Mengen der Komponenten a) bis d) einerseits und der Komponente e) andererseits entsprechend abgestimmt werden.

Die Komponente f) ist vorzugsweise ausgewählt aus der Gruppe bestehend aus "Benzophenone, wie Benzophenon, Benzoylbenzylsäure, 4-Phenylbenzophenon, Hydroxybenzophenon, Benzoin, Benzoin-C1-C4-alkylether, wie Benzoin-ethyl-ether, Benzoin-isopropyl-ether, Benzoin-butyl-ether, Benzoin-isobutyl-ether, Acetophenon, Acetophenon-Derivate, Thioxanthone, Alkylanthraquinone, Phosphinoxide, oder eine Mischung solcher Substanzen". Geeignete Photoinitaitoren sind beispielsweise die unter folgenden Namen im Handel erhältlichen Produkte Darocure® und Irgacure® (beide Ciba).

Die Komponente g) ist vorzugsweise ausgewählt aus der Gruppe bestehend aus "2-Methylimidazol, Phenylimidazol, 2-Phenyl-4-methylimidazol, bis(2-ethyl-4-methylimidazol), 2-Phenyl-4-methyl-5-hydroxymethylimidazol, 2-Phenyl-4,5-dihydroxymethylimidazol, Triazin-additions-Imidazol, 2-Ethyl-4-methylimidazol, 2-Undecylimidazol, 1-Cyanoethyl-2-methylimidazol, 1-Cyanoethyl-2-phenylimidazol, 1-Cyanoethyl-2-ethyl-4-methylimidazol, 1-Aminoethyl-2-methylimidazol, 1-(Cyanoethylaminoethyl)-2-methylimidazol, 1-Cyanoethyl-2-phenyl-4,5-bis(cyanoethoxymethyl)imidazol, Epoxidaddukte, mikroverkapselte Vernetzungskatalysatoren, und Mischungen solcher Substanzen.

Die Komponente h) kann grundsätzlich alle in der Lackchemie bekannten Additive bzw. Mischungen von Additiven umfassen. Sie ist beispielsweise ausgewählt ist aus der Gruppe bestehend aus "Antischaummittel, Netzmittel, Oberfläche- und Rheologie-Additive, Trockner, Konservierungsmittel, Stabilisatoren, Korrosionsschutzmitteln, Farbstoffe, Pigmente mit einem Partikeldurchmesser kleiner als 5 µm, insbesondere kleiner als 2 µm, und Mischungen solcher Stoffe". Geeignete Vernetzungskatalysatoren sind beispielsweise die unter folgenden Namen im Handel erhältlichen Produkte. Antischaummittel: Byk-020, Byk-052 der Fa. Byk; Netzmittel: Baysilone der Fa. Bayer, Byk-306, Byk-310 der Fa. Byk; Konservierungsmittel: Borchers S1 der Fa. Borchers; Die Komponente h) ist vorzugsweise frei von nicht reaktiven organischen Lösemitteln. Weitere Additive sind beispielsweise in der Literaturstelle Ullmann's Encyclopedia of Industrial Chemistry, Wiley Verlag, elektronische Ausgabe 2006, in dem Kapitel "Paint Additives" beschrieben.

In Hinblick auf die mengenmäßigen Verhältnisse ist es bevorzugt, wenn die flüssige Zubereitung besteht aus:
30 - 80 Gew.-%, insbesondere 50 - 80 Gew.-% a),
0,1 - 40 Gew.-%, insbesondere 15 - 30 Gew.-% b),
0 - 15 Gew.-%, insbesondere 0,1 - 15 Gew.-% c),
0 - 1 Gew.-%, insbesondere 0,1 - 1,0 Gew.-% d),
30 - 80 Gew.-%, insbesondere 30 - 50 Gew.-% e),
0,1 - 6,0 Gew.-%, insbesondere 1,0 - 6,0 Gew.-% f),
0,1 - 3,0 Gew.%, insbesondere 0,5 - 3,0 Gew.-% g),
0,1 - 10,0 Gew.-%, insbesondere 0,1 - 5,0 Gew.-% h).

Die Chemie der Zusammenhänge einer erfindungsgemäßen Haftvermittlerschicht ist die folgende. Bei niedrigen Temperaturen reagieren die Epoxidgruppen der Komponente e) nicht mit den Epoxid-reaktiven Gruppen der ethylenisch ungesättigten Monomere, die solche Gruppen enthalten. Wird die Zubereitung mit Licht, insbesondere UV-Licht, ausreichender Bestrahlungsintensität bestrahlt, so copolymerisieren die Komponenten a) bis d) miteinander. Die insofern "getrocknete" Beschichtung enthält im Falle der Acrylatmonomere folglich Polyacrylatmoleküle mit Epoxid-reaktiven Gruppen und das Epoxidharz, wobei zwischen diesen beidem Molekülspezies (noch) keine nennenswerte Reaktion stattgefunden hat. Aufgrund der Polymerisation der Komponenten a) bis d) und der weitgehenden Abwesenheit von nichtreaktiven Lösemitteln ist aus der flüssigen Zubereitung durch die Photopolymerisation der Acrylatmonomere ein fester Überzug bzw. eine feste Beschichtung entstanden. Diese Beschichtung hat bei niedrigen Temperaturen keine besondere Adhäsionskraft. Wenn diese Beschichtung jedoch erhöhten Temperaturen ausgesetzt wird, schmilzt diese auf und die thermische Vernetzung unter Reaktion der Epoxid-reaktiven Gruppen der Polyacrylatmoleküle mit den Epoxidgruppen des Epoxidharzes findet statt, wobei im Zuge der thermischen Vernetzung eine beachtliche Klebekraft bzw. Haftstärke erreicht wird. Diese beträgt mehr als 1 N/m, meist sogar mehr als 3 N/m.

Mit der Erfindung wird erreicht, dass die Aufbringung der Haftvermittlerschicht im Offset-, Letterset-, Flexo- oder Ratsertiefdruck-Verfahren stattfinden kann, welches deutlich höhere Ansprüche an die Rezeptur stellt als eine Aufbringung via Siebdruck, Rakeln oder Imprägnieren. Die Drucktechnologien Offsetdruck, Lettersetdruck, Flexodruck und Rastertiefdruck erlauben es, dünne Schichten schnell und präzise zu applizieren. Dies stellt wiederum höhere Ansprüche an das zu verdruckende Material hinsichtlich Füllstoffe (Partikel < 5 µm) sowie rheologischer Eigenschaften wie Viskosität, Tack und der sogenannten "Farbaufspaltung" dar. All diesen Anforderungen genügt die erfindungsgemäße Haftvermittlerschicht. Es ist aber selbstverständlich auch möglich, dass die Zubereitung gerakelt, gecoatet, filmgegossen, gestrichen oder aufgesprüht wird, was auch dickere Schcihtdicken als 30 µm bewirken kann.

Die Erfindung betrifft des Weiteren ein Verfahren zur Herstellung einer erfindungsgemäßen Haftvermittlerschicht mit den folgenden Verfahrensschritten:
A) die Komponenten a) bis h) werden miteinander gemischt,
A1) die erhaltene Mischung wird homogenisiert,
A2) die homogenisierte Mischung wird als ein Überzug auf ein Substrat aufgetragen,
B) der Überzug wird optional einer Lichtstrahlung ausgesetzt.

Die Reihenfolge der Mischung der Komponenten ist dabei grundsätzlich beliebig. So ist es möglich, alle Komponenten gleichzeitig zu mischen. Es können aber auch die Komponenten a) bis d) vorgemischt und dann die weiteren Komponenten hinzu gemischt werden. Die Mischung erfolgt mittels in der Technologie der Lackchemie und/oder der Adhäsivchemie üblicher Rührvorrichtungen. Die Homogenisierung kann mittels des Rührers aber auch mittels spezieller Vorrichtungen zur Homogenisierung, wie beispielsweise Dissolverschiebe, erfolgen.

Die Stufen A) bis B) werden vorzugsweise bei einer Temperatur im Bereich von -20 °C bis +50 °C, insbesondere im Bereich von 0 °C bis 30 °C, vorzugsweise im Bereich von 15 °C bis 30 °C, ausgeführt. Die Stufe B) wird vorzugsweise mit sichtbarem Licht oder mit UV-Strahlung und mit einer Bestrahlungsintensität von 100 bis 5000 mW/cm², insbesondere von 100 bis 1000 mW/cm², vorzugsweise von 200 bis 600 mW/cm², ausgeführt. Dies kann beispielsweise in einem Plextor- bzw. Beltrontrockner erfolgen.

Die Erfindung betrifft des Weiteren ein erstes Verfahren zur Verbindung eines Substrates mit einem Aufsatzelement, wobei auf einer Substratkontaktfläche des Substrates eine erfindungsgemäße Haftvermittlerschicht, einschließlich der Stufe B), hergestellt wird, wobei das Aufsatzelement mit einer Aufsatzelementkontaktfläche flächig auf die Haftvermittlerschicht aufgesetzt wird, und wobei der Verbund aus Substrat, Haftvermittlerschicht und Aufsatzelement einer Vernetzungstemperatur im Bereich von 80 °C bis 250 °C für eine Dauer von 1 s bis 6000 s ausgesetzt wird. Die Vernetzungstemperatur liegt vorzugsweise im Bereich von 100 °C bis 250 °C, insbesondere im Bereich von 120°C bis 200 °C, und die Dauer beträgt 1 s bis 600 s, vorzugsweise 1 s bis 60 s. Das Aufsatzelement, wird während des Aussetzens der Vernetzungstemperatur vorzugsweise gegen das Substrat mit einem Druck von 0,01 bis 50 bar, insbesondere 1 bis 30 bar, höchstvorzugsweise 2 bis 20 bar, gepresst. Dieser Vorgang kann diskontinuierlich bzw. halbkontinuierlich beispielsweise in einem Heißpresswerkzeug, ggf. mit kontinuierlicher Zuführung, oder kontinuierlich, beispielsweise in einem Rollenlaminator, durchgeführt werden.

Die Erfindung betrifft zudem ein zweites Verfahren zur Verbindung eines Substrats mit einem Aufsatzelement, wobei auf einer Substratkontaktfläche eine erfindungsgemäße Haftvermittlerschicht, ohne die Stufe B), hergestellt wird, wobei das Aufsatzelement mit einer Aufsatzelementkontaktfläche flächig auf die (nicht getrocknete, i.e. noch feuchte) Haftvermittlerschicht aufgesetzt und hieran angedrückt wird, und wobei der Verbund aus Substrat, Haftvermittlerschicht und Aufsatzelement einer Bestrahlung mit Licht, insbesondere einer Bestrahlung mit UV-Strahlung und mit einer Bestrahlungsintensität von 100 bis 5000 mW/cm², insbesondere von 100 bis 1000 mW/cm², vorzugsweise von 200 bis 600 mW/cm², und einer gleichzeitigen Erwärmung auf 30 °C bis 80 °C, vorzugsweise 40 °C bis 70 °C, ausgesetzt wird. Der Verbund kann optional, aber nicht zwingend, anschließend einer Temperatur im Bereich von 80 °C bis 250 °C, insbesondere von 10 °C bis 250 °C, vorzugsweise von 120 °C bis 200°C, für eine Dauer von 1 s bis 6000 s, insbesondere von 1 s bis 600 s, vorzugsweise von 60 s bis 600 s, ausgesetzt werden. Das Andrücken kann beispielsweise mittels einer Rollenwalze erfolgen, wodurch Lufteinschlüsse sich vermeiden lassen und ein inniger Kontakt zwischen dem Aufsatzelement und dem Substrat erzeugt wird. Im Rahmen des zweiten Verfahrens versteht es sich, dass das Substrat und/oder das Aufsatzelement Licht der Wellenlänge, welche bei der Bestrahlung eingesetzt wird, durchläßt, i.e. hierfür eine Transmission von zumindest 1 %, besser zumindest 10 %, aufweist. Wenn das Aufsatzelement ein Hologramm ist, erfolgt die Bestrahlung typischerweise von der Seite des Substrats, auf welcher das Aufsatzelement aufliegt.

Das zweite Verfahren weist als Vorteil gegenüber den vorstehend genannten ersten Verfahren auf, dass im Falle von Hologrammen als Aufsatzelemente keine gleichzeitige Anwendung von Druck und hohen Temperaturen erfolgen muss. Dadurch wird eine Beeinträchtigung der Rekonstruktion von Details des Hologramms vermieden und selbst feinste Nuancen bleiben rekonstruierbar. Im Rahmen des Andrückens an den feuchten Film des Haftvermittlers werden allenfalls Drucke von weniger als 1 Bar, typischerweise weniger als 0,2 Bar, angewandt und dies geschieht bei Raumtemperatur.

In einer Variante der erfindungsgemäßen Verfahren ist nicht nur allein die Substratkontaktfläche mit der Haftvermittlerschicht beschichtet, sondern die Aufsatzelementkontaktfläche ist ebenfalls mit der erfindungsgemäßen Haftvermittlerschicht ausgestattet. In einer weiteren Variante kann nur die Aufsatzelementkontaktfläche mit der erfindungsgemäßen Haftvermittlerschicht ausgestattet sein.

Bevorzugt ist es, wenn die Substratkontaktfläche aus einem Polymerwerkstoff, insbesondere einem Polycarbonatwerkstoff, gebildet ist. Bei dem Substrat kann es sich insbesondere um ein Sicherheits- und/oder Wertdokument handeln. Der Begriff des Wert- und/oder Sicherheitsdokumentes umfasst im Rahmen der Erfindung insbesondere Personalausweise, Reisepässe, ID-Karten, Zugangskontrollausweise, Visa, Steuerzeichen, Tickets, Führerscheine, Kraftfahrzeugpapiere, Banknoten, Schecks, Postwertzeichen, Kreditkarten, beliebige Chipkarten und Haftetiketten (z.B. zur Produktsicherung). Solche Sicherheits- und/oder Wertdokumente weisen typischerweise ein Substrat, eine Druckschicht und optional eine transparente Deckschicht auf. Ein Substrat ist eine Trägerstruktur, auf welche eine Druckschicht oder mehrere Druckschichten mit Informationen, Bildern, Mustern und dergleichen aufgebracht werden. Als Materialien für ein Substrat kommen alle fachüblichen Werkstoffe auf Papier- und/oder Kunststoffbasis in Frage, wobei das Substrat seinerseits wiederum aus verschiedenen Schichten gebildet sein kann. Wenn für das Substrat ein Polyolefin eingesetzt wird, sollte der Teil seiner Oberfläche, auf welchen das Aufsatzelement aufzubringen ist, in fachüblicher Weise aktiviert sein.

Als Aufsatzelement ist eine typischerweise flache bauliche Einheit bezeichnet, die mit einer ihrer Hauptflächen mit einer Hauptfläche des Substrats verbunden wird. Dies wird auch als Fügeelement bezeichnet. Grundsätzlich kann das Material des Aufsatzelementes beliebig sein, sofern es sich um ein klebbares Material handelt. Das Aufsatzelement kann insbesondere ebenfalls aus einem Polymerwerkstoff, z.B. auf Basis Photopolymere, beispielsweise aus Metal-Acrylat-Monomeren bzw. Methacrylat-Monomeren, auf Basis thermoplastische Polymere, wie Polyvinyl oder Polyester, oder aus PMMA (Poly(methylmethacrylat)) gebildet sein. Sofern Polyolefine eingesetzt werden sollen, sollte die zu vergebene Oberfläche des Aufsatzelementes in fachüblicher Weise aktiviert sein. Bezüglich weiterer verwendbarer Materialien wird auf die Literaturstelle Ullmann's Encyclopedia of Industrial Chemistry, Wiley-VCH Verlag GmbH & Co. KGaA, 2002, Nicholas George und Thomas Stone, "Holography", verwiesen. Insbesondere kann es sich um einen holografischen Datenträger, beispielsweise um ein Phasenhologramm vom Volumentyp, handeln. Bezüglich näherer Informationen zu solchen Datenträgern wird auf die Literaturstelle DE 10 2004 012 787 A1 sowie die darin genannten Referenzen verwiesen.

Die Erfindung betrifft schließlich einen Verbund mit einem Substrat und einem Aufsatzelement, wobei das Aufsatzelement mit dem Substrat mittels einer optional thermisch behandelten erfindungsgemäßen Haftvermittlerschicht verklebt ist. Ein solcher Verbund ist mit dem vorstehend erläuterten erfindungsgemäßen Verfahren herstellbar, erhältlich mit einem Verfahren nach einem der Ansprüche 23 bis 32. Bei dem Verbund kann es sich insbesondere um ein Sicherheits- und/oder Wertdokument handeln, wobei die Substratkontaktfläche vorzugsweise aus einem Polycarbonatwerkstoff gebildet ist, und wobei das Aufsatzelement ein holografischer Datenträger ist.

Im Folgenden wird die Erfindung anhand von lediglich Ausführungsformen darstellenden Beispielen näher erläutert.

### Beispiel 1: Herstellung des Basissystems (mit elastifizierendem Monomer).

In einem 500-ml-Becherglas werden 60 g Epoxidharz auf Bisphenol-A-Basis (Epilox® A 50-02, Leuna Harze), 80 g Isobornylacrylat (IBOA, Cytec), 30 g ethoxyliertes Phenylacrylat (Ebecryl® 110, Cytec) und 30 g 2-Carboxyethylacrylat (Ebecryl® β-CEA, Cytec) gegeben und mit einem Propellerrührer (optional Dissolverscheibe) für 15 min bei Raumtemperatur innigst verrührt. Man erhält 200 g der Basismischung JS-1, welche für die weiteren Versuche bei Dunkelheit (braune Glasflasche) und Temperaturen < 5 °C gelagert werden.

### Beispiel 2: Herstellung des Basissystems (ohne elastifizierendes Monomer).

In einem 500-ml-Becherglas werden 60 g Epoxidharz auf Bisphenol-A-Basis Epoxidharz (Epilox® A 50-02, Leuna Harze), 110 g Isobomylacrylat (IBOA, Cytec), und 30 g 2-Carboxyethylacrylat (Ebecryl® β-CEA, Cytec) gegeben und mit einem Propellerführer, (optional Dissolverscheibe) für 15 min bei Raumtemperatur innigst verrührt. Man erhält 200 g der Basismischung JS-2, welche für die weiteren Versuche bei Dunkelheit (braune Glasflasche) und Temperaturen < 5 °C gelagert werden.

### Beispiel 3: Herstellung des katalysierten Basissystems.

In einem 500-ml-Becherglas werden 60 g Epoxidharz auf Bisphenol-A-Basis (Epilox® A 50-02, Leuna Harze), 80 g Isobomylacrylat (IBOA, Cytec), und 30 g 2-Carboxyethylacrylat (Ebecryl® β-CEA, Cytec) gegeben und mit einem Propellerrührer (optional Dissolverscheibe) für 45 min bei Raumtemperatur innigst verrührt. 2 g 2-Ethyl-4-Methyl-imidazol (Dyhard®MI-C, Degussa) werden in 28 g Isobornylacrylat unter Rühren (Magnetrührer) gelöst und dieses Gemisch mit der Epoxidlösung vereinigt und für weitere 15 min gerührt. Man erhält ca. 200 g der Basismischung, welche für die weiteren Versuche bei Dunkelheit (braune Glasflasche) und Temperaturen < 5 °C gelagert wurde.

### Beispiel 4: Herstellung des verdruckbaren Systems.

In einem 100-ml-Becherglas wurden 39 g Basismischung JS-1 (oder JS-2) und 1 g Photoinitiator (Darocure 4265) für 5 min bei Raumtemperatur (20 °C) gemischt. Zur Homogenisierung genügte ein Magnetrührer. Man erhielt ein Material mit einer Viskosität von 300 - 700 mPa s, welches entweder direkt weiterverarbeitet oder bei Dunkelheit (braune Glasflasche) und Temperaturen < 5 °C gelagert wurde.

### Beispiel 5: Herstellung des verdruckbaren, katalysierten Systems.

In einem 100-ml-Becherglas wurden 38 - 39 g Basismischung JS-1 (JS-2) und 1 g Photoinitiator (Darocure 4265) und 1 - 0 g Katalysator 2-Ethyl-4-Methylimidazol für 90 min bei Raumtemperatur gemischt. Zur Homogenisierung genügte ein Magnetrührer. Man erhielt ein Material mit einer Viskosität von 300 - 700 mPa s, welches entweder direkt weiterverarbeitet oder bei Dunkelheit (braune Glasflasche) und Temperaturen < 5 °C gelagert wurde.

### Beispiel 6: Verdruckung der Basis-Systeme.

Zum Verdrucken werden eine RIMEC ARX 010 mit Plextor UV 030 Trockner sowie alternativ ein Beltron UV-IR Kombitrockner BE 20/II verwendet. Die RIMEC besitzt ein Trockenoffsetfarbwerk und Einzelkarteneinzug. Als Druckplatte wird eine grundierte Aluminiumdruckplatte verwendet, welche das Gummituch flächig benetzt. Ca. 20 g der Basislösung des Beispiels (5) wurde nach Anschalten der Maschine direkt auf die Rollen des Farbwerkes gegeben. So kann mit wenig Material ein Andruck erfolgen. Selbstverständlich ist auch die Aufgabe über den Farbkasten möglich.

Über den Einzelkarteneinzug werden Polycarbonat(PC-)-Karten (innenliegend bedruckt oder unbedruckt, Abmaße 54 x 86 mm², Dicke 760 µm) in das Druckwerk eingeführt und bedruckt.

Sofern eine Trocknung und Bestrahlung mit Licht vor dem Aufbringen eines Aufsatzelements vorgesehen ist, erfolgt die Trocknung mit einem Plextor bzw. Beltrontrockner bei Bestrahlungsintensitäten von 200 - 600 mW/cm² und ergibt verblockungsfreie, mit Klebstoff beschichtete Karten.

### Beispiel 7a: Verklebung des HRM mit den beschichteten Karten (erstes Verfahren).

Auf die nach Beispiel 6, einschließlich Trocknung und Bestrahlung mit Licht, erzeugten Karten wurde ein belichtetes HRM (Holografic Recording Material, Volumenhologramm) gelegt. Als HRM kann das einschlägig bekannte Material OmniDex® von DuPont verwendet werden. Danach erfolgte Verpressung bei Temperaturen > 140° C, Drücken > 2 bar und Zeiten von > 60 s. Das Ergebnis sind verklebte Filme mit Haftstärken > 3 N/m. Je nach Wahl des Katalysators sowie dessen Menge ist es möglich, die Verklebezeit zu senken.

Die Endvemetzung kann alternativ kontinuierlich auch in einem Rollenlaminator oder halbkontinuierlich in einem Heiß-Presswerkzeug mit kontinuierlicher Zuführung erfolgen.

### Beispiel 7b: Verkleben des HRM mit den beschichteten Karten (zweites Verfahren).

Auf eine nach Beispiel 6, ohne Trocknung und ohne Bestrahlung mit Licht, erzeugte Karte wurde ein belichtetes HRM wie in Beispiel 7a gelegt, und zwar auf die noch feuchte Haftvermittlerschicht. Anschließend wurde das HRM an die Karte mittels einer Rollenwalze angedrückt, wodurch Lufteinschlüsse herausgedrückt wurden. Daraufhin erfolgte eine Trocknung des erhaltenen Verbundes bei ca. 50 °C in einem UV-Trockner. Optional kann ein Nachtempern erfolgen bei beispielsweise 130 °C für 5 min. ohne Druckanwendung, um eine (vollständige) Vernetzung der Epoxidgruppen zu erreichen. Aufrgrund des fehlenden Drucks bzw. sehr geringen Druckes der Rollenwalze bei den Temperaturbehandlungen werden fixierte Volumenhologramme in einer solch guten Qualität erhalten, dass sich feinste Nuancen rekonstruieren lassen. Die allein mit der UV-Trocknung erzielte Haftung übersteigt 30 N/cm bei weitem, so dass grundsätzlich das vorstehend genannte Nachtempern gar nicht erforderlich ist.

Der gesamte Schichtaufbau (Haftvermittlerschicht und Hologramm) ist in beiden Beispielen 7a und 7b mit weniger als 20 µm dünner als es mit Transfer- oder Adhäsivfolien realisierbar wäre.

### Beispiel 8: Messung der Viskositäten

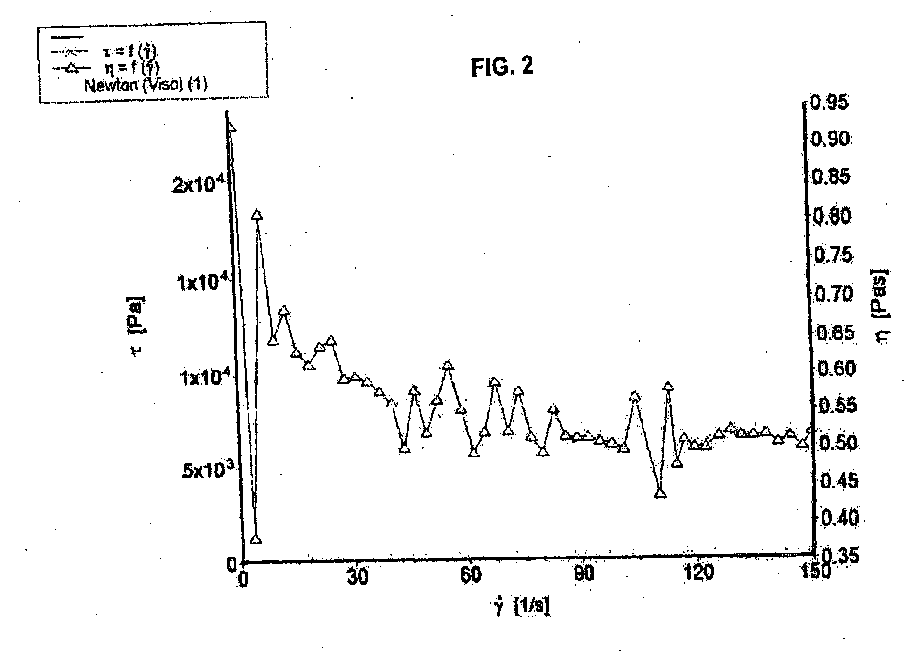

Die Viskositäten der Beispiele 4 und 5 bzw. der erfindungsgemäßen Zusammensetzung können wie folgt gemessen werden. Verwendet wird ein Rotationsviskosimeter des Typs Haake RotoVisco 1 bzw. RV1, (erhältlich von Thermo Electron GmbH, Karlsruhe) mit High Shear Zylinder 25µm Spalt HS25 und Temperiergerät TCP/P. Gemessen wird bei einer geregelten Temperatur der Probe von 20°C, einem Schergefällebereich von 0,001 s⁻¹ bis 150 s⁻¹ (t = 180 s, CR lin.) und ansonsten nach Herstelleranleitung und mit Auswertung durch Herstellersoftware (Version Rheowin 3.23). Für eine Zusammensetzung entsprechend dem Beispiel 5 wird als mittlere dynamische Viskosität 0,5531 Pa*s gemessen (siehe auch Fig. 2).

### Beispiel 9: Charakterisierung einer erfindungsgemäßen Haftvermittlerschicht

Zur besseren Reproduzierbarkeit der Analytik wurde der Klebstoff auf einen Glas-Objektträger getropft und mit UV-Strahlung bei 450 mW/cm² getrocknet (photopolymerisiert).

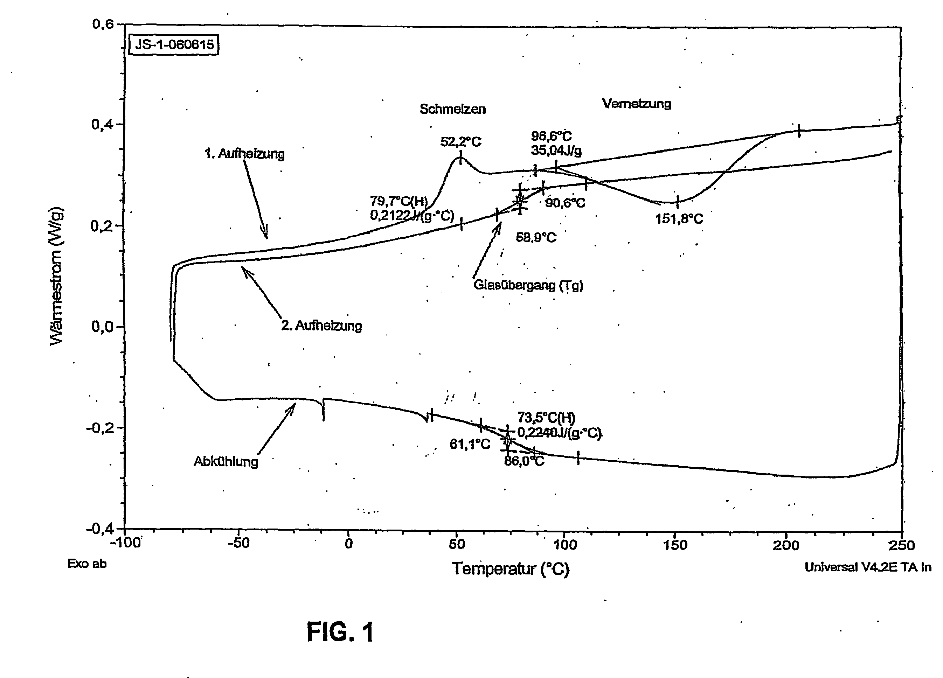

Dass es sich bei den Reaktionen einer erfindungsgemäß eingesetzten Zusammensetzung um einen Dual-Mode-Mechanismus handelt, konnte mit DSC-Messungen (Differential-Scanning-Calorimetry) nachgewiesen werden. Dazu wurde die Beschichtung nach Beispiel (6) von der Oberfläche entfernt und mit der (M)DSC Q1000 von TA Instruments bei Heiz- (Kühl-)raten von 10 K/min bestimmt. Fig. 1 zeigt die erste und zweite Aufheizung einer ausgewählten Klebstoffprobe. Zwischen beiden Aufheizungen erfolgte eine definierte Abkühlung.

Bei der ersten Aufheizung ist bei ca. 52 °C eine endotherme Reaktion erkennbar (bei der Messkurve machen sich endotherme Reaktionen als Maxima und exotherme Reaktionen als Minima bemerkbar). Dabei handelt es sich um das Ausschmelzen des Systems. Im Verlauf der Aufheizung ist eine exotherme Reaktion in Form einer Ausbeulung der Messkurve bei 151,8 °C zu erkennen.

Dieser Peak entspricht der optimalen Temperatur zur Erzeugung der Vernetzungsreaktion und ist damit der Beweis, dass das verblockungsfreie Material noch zu einer thermisch initiierten Reaktion fähig ist. Beim zweiten Aufheizen ist dieses Signal verschwunden. Statt dessen beobachtet man nur einen Glasübergang bei ca. 68 °C. Dies zeigt wiederum, dass die Vernetzungsreaktion irreversibel verläuft.

### Beispiel 10: Herstellung eines erfindungsgemäßen Sicherheits- und/oder Wertdokumentes

Aus dem Laminator kommt eine PC-Karte, in welcher die üblichen Sicherheitsmerkmale, Aufdrucke und Prägungen eines Ausweises vorhanden sind. Dieser Karten-Rohling wird mittels eines Druckwerkes im Offset- bzw. Letterset-Verfahren mit einer erfindungsgemäßen Haftvermittlerschicht, beispielsweise gemäß Beispiel 6 (Klebstoff) versehen. Wesentlich hierbei ist, dass die Haftvermittlerschicht im für Offset typischen Bereich von < 5 µm liegt und möglichst einheitlich über die Kartenoberfläche verteilt ist. Ein weiteres Charakteristikum ist, dass sich die beschichteten Karten verblockungsfrei stapeln und lagern lassen. Der eigentliche Fügevorgang wird initiiert, indem ein vereinzeltes Hologramm, z.B. ein Identigram®, auf die beschichtete Karte gelegt wird und der ganze Verbund thermisch verpresst wird, wie beispielsweise in Beispiel 7 beschrieben.

Der Vorteil der erfindungsgemäßen Arbeitsweise liegt insbesondere darin, dass Rohlinge der Sicherheits- und/oder Wertdokumente, mit der Haftvermittlerschicht, gelagert werden können, und zwar durchaus auch über längere Zeiträume, beispielsweise mehr als 1 Monat, vorzugsweise mehr als 2 Monate, höchstvorzugsweise mehr als 6 Monate. Das Verkleben mit einem zu applizierenden Aufsatzelement kann "on demand" zum gewünschten Zeitpunkt und lediglich durch Applikation von Wärme und Druck erfolgen. Insgesamt werden die Produktionsprozesse effizienter, da die Herstellung der Haftvermittlerschicht unabhängig vom augenblicklichen Bedarf ist.

## Patentansprüche

1. Thermisch vernetzbare, feste Haftvermittlerschicht, welche **dadurch** erhältlich ist, dass
A) eine flüssige Zubereitung bestehend aus
a) 19,9 - 80 Gew.-% eines mit den Komponenten b), c) und d) copolymerisierbaren und von diesen verschiedenen ethylenisch ungesättigten Monomers ohne eine mit Epoxidgruppen reaktive funktionelle Gruppe, oder einer Mischung verschiedener solcher Monomere,
b) 0,1 - 60,2 Gew.-% eines mit den Komponenten a), c) und d) copolymerisierbaren und von diesen verschiedenen ethylenisch ungesättigten Monomers mit zumindest einer mit Epoxidgruppen reaktiven funktionellen Gruppe, oder einer Mischung verschiedener solcher Monomere,
c) 0-30 Gew.-% eines mit den Komponenten a), b) und d) copolymerisierbaren und von diesen verschiedenen ethylenisch ungesättigten Monomers mit einer Alkyoxygruppe, oder einer Mischung aus verschiedenen solcher Monomere.
d) 0 - 5 Gew.-% eines mit den Komponenten a), b) und c) copolymerisierbaren und von diesen verschiedenen ethylenisch ungesättigten Monomers mit im Mittel mehr als zwei mit Epoxidgruppen reaktiven funktionellen Gruppen, welches verschieden von der Komponente b) ist, oder einer Mischung aus verschiedenen solcher Monomere,
e) 19,9 - 80 Gew.-% eines Monomers mit im Mittel zumindest einer Epoxidgruppe, insbesondere mehr als einer, beispielsweise im Mittel zumindest zwei Epoxidgruppen, oder einer Mischung aus verschiedenen solcher Monomere,
f) 0 - 10 Gew.-% eines Photopolymerisationsiniliators oder mehrerer verschiedener Photopolymerisationsinitiators.
g) 0 - 10 Gew.-% eines Vernetzungskatalysators oder mehrerer verschiedener Vernetzungskatalysatoren, und
h) 0 - 15 Gew.-% Zusatzstoffe,
wobei die Summe der Komponenten a) bis h) stets 100 Gew.-% ergibt,
als Überzug auf ein Substrat und/oder auf eine Aufsatzelementkontaktfläche aufgetragen wird, und
B) optional die Komponenten a) bis d) des in Stufe A) erhaltenen Überzugs durch Bestrahlung mit Licht photopolymerisiert werden.

2. Haftvermittlerschicht nach Anspruch 1, wobei die Zubereitung eine Viskosität im Bereich von 10 bis 2000 mPa*s, vorzugsweise 100 bis 1000 mPa*s, insbesondere 300 bis 700 mPa*s, aufweist.

3. Haftvermittlerschicht nach einem der Ansprüche 1 oder 2, wobei die Zubereitung mittels einer Drucktechnologie, insbesondere Offsetdruck, Lettersetdruck, Flexodruck oder Rastertiefdruck, auf das Substrat und/oder auf die Aufsatzelementkontaktfläche aufgetragen wird, oder wobei die Haftvermittlerschicht hierauf gerackelt, gevoatet, filmgegossen, gestrichen oder aufgespüht wird.

4. Haftvermittlerschicht nach einem der Ansprüche 1 bis 3, wobei die Komponente e) in einer Mischung der Komponenten a) bis d) vollständig löslich ist.

5. Haftvermittlerschicht nach einem der Ansprüche 1 bis 4, wobei die Komponente h) frei von nicht reaktiven organischen Lösemitteln ist.

6. Haftvermittlerschicht nach einem der Ansprüche 1 bis 5, wobei die flüssige Zubereitung besteht aus:
30 - 80 Gew.-%, insbesondere 50 - 80 Gew.-% Komponente a),
0.1 - 40 Gew.-%, insbesondere 15 - 30 Gew.-% Komponente b),
0 - 15 Gew.-%, insbesondere 0,1 - 15 Gew.-% Komponente c),
0 - 1,0 Gew.-%, insbesondere 0,1 - 1,0 Gew.-% Komponente d),
30 - 80 Gew.-%, insbesondere 30 - 50 Gew.-% Komponente e),
0,1 - 6,0 Gew.-%, insbesondere 1.0 - 6,0 Gew.-% Komponente f),
0,1 - 3,0 Gew.-%, insbesondere 0,5 - 3,0 Gew.-% Komponente g),
0,1 - 10.0 Gew.-%, insbesondere 0.1 - 5,0 Gew.-% Komponente h).

7. Verfahren zur Herstellung einer Haftvermittlerschicht nach einem der Ansprüche 1 bis 6 mit den folgenden Verfahrensschritten:
A) die Komponenten a) bis h) werden miteinander gemischt,
A1) die erhaltene Mischung wird homogenisiert,
A2) die homogenisierte Mischung wird als ein Überzug auf ein Substrat und/oder eine Aufsatzelementkontaktfläche aufgetragen,
B) der Überzug wird optional einer Lichtstrahlung ausgesetzt.

8. Verfahren nach Anspruch 7, wobei die Stufen A) und B) bei einer Temperatur im Bereich von -20 °C bis +50 °C, insbesondere im Bereich von 0 °C bis 30 °C, vorzugsweise im Bereich von 15 °C bis 30 °C, ausgeführt werden.

9. Verfahren zur Verbindung eines Substrates mit einem Aufsatzelement, wobei auf einer Substratkontaktfläche des Substrates und/oder einer Aufsatzeiementkontaktfläche des Aufsatzelements eine Haftvermittlerschicht nach einem der Ansprüche 1 bis 6, einschließlich der Stufe B), hergestellt wird, wobei das Aufsatzelement mit der Aufsatzelementkontaktfläche flächig auf die Substratkontaktfläche aufgesetzt wird, und wobei der Verbund aus Substrat. Haftvermittlerschicht und Aufsatzelement einer Vernetzungstemperatur im Bereich von 80 °C bis 250 °C für eine Dauer von 1 s bis 6000 s ausgesetzt wird.

10. Verfahren zur Verbindung eines Substrats mit einem Aufsatzelement, wobei auf einer Substratkontaktfläche und/oder einer Aufsatzelementkontaktfläche eine Haftvermittlerschicht nach einem der Ansprüche 1 bis 6, ohne die Stufe B), hergestellt wird, wobei das Aufsatzelement mit der Aufsatzelementkontaktfläche flächig auf die Substratkontaktfläche aufgesetzt und hieran angedrückt wird, und wobei der Verbund aus Substrat, Haftvermittlerschicht und Aufsatzelement einer Bestrahlung mit Licht, insbesondere einer Bestrahlung mit UV-Strahlung und mit einer Bestrahlungsintensität von 100 bis 5000 mW/cm². insbesondere von 100 bis 1000 mW/cm², vorzugsweise von 200 bis 600 mW/cm², und einer gleichzeitigen Erwärmung auf 30 °C bis 80 °C, vorzugsweise 40 °C bis 70 °C, ausgesetzt wird.

11. Verfahren nach einem der Ansprüche 9 oder 10, wobei die Aufsatzelementontaktfläche ebenfalls oder ausschließlich eine Haftvermittlerschicht nach einem der Ansprüche 1 bis 6 trägt.

12. Verfahren nach einem der Ansprüche 9 bis 11, wobei das Substrat ein Substrat eines Sicherheits- und/oder Wertdokumentes ist.

13. Verfahren nach einem der Ansprüche 9 bis 12, wobei das Aufsatzelement aus einem Polymerwerkstoff ist, wobei das Aufsatzelement vorzugsweise ein holografischer Datenträger, insbesondere Phasenhologramm vom Volumentyp, ist.

14. Verbund mit einem Substrat und einem Aufsatzelement, wobei das Aufsatzelement mit dem Substrat mittels einer optional thermisch behandelten Haftvermittlerschicht nach einem der Ansprüche 1 bis 6 verklebt ist.

15. Monomer Zubereitung bestehend aus
a) 19,9 - 80 Gew.-% eines mit den Komponenten b), c) und d) copolymerisierbaren und von diesen verschiedenen ethylenisch ungesättigten Monomers ohne eine mit Epoxidgruppen reaktive funktionelle Gruppe, oder einer Mischung verschiedener solcher Monomere
b) 0,1 - 60,2 Gew.-% eines mit den Komponenten a), c) und d) copolymerisierbaren und von diesen verschiedenen ethylenisch ungesättigten Monomers mit zumindest einer mit Epoxidgruppen reaktiven funktionellen Gruppe, oder einer Mischung verschiedener solcher Monomere,
c) 0 - 30 Gew.-% eines mit den Komponenten a), b) und d) copolymerisierbaren und von diesen verschiedenen ethylenisch ungesättigten Monomers mit einer Alkyoxygruppe, oder einer Mischung aus verschiedenen solcher Monomere,
d) 0 - 5 Gew.-% eines mit den Komponenten a), b) und c) copolymerisierbaren und von diesen verschiedenen ethylenisch ungesättigten Monomers mit im Mittel mehr als zwei mit Epoxidgruppen reaktiven funktionellen Gruppen, welches verschieden von der Komponente b) ist, oder einer Mischung aus verschiedenen solcher Monomere,
e) 19,9 - 80 Gew.-% eines Monomers mit im Mittel zumindest einer Epoxidgruppe, insbesondere mehr als einer, beispielsweise im Mittel zumindest zwei Epoxidgruppen, oder einer Mischung aus verschiedenen solcher Monomere,
f) 0 - 10 Gew.-% eines Photopolymerisationsinitiators oder mehrerer verschiedener Photopolymerisationsinitiators,
g) 0 - 10 Gew.-% eines Vernetzungskatalysators oder mehrerer verschiedener Vernetzungskatalysatoren, und
h) 0 - 15 Gew.-% Zusatzstoffe,
wobei die Summe der Komponenten a) bis h) stets 100 Gew.-% ergibt.

## Claims

1. A thermally cross-linkable, solid adhesion promoting layer that is obtainable by that
A) a liquid preparation consisting of
a) 19.9 - 80 wt.% of an ethylenically unsaturated monomer being copolymerizable with the components b), c) and d) and being different therefrom without a functional group being reactive with epoxide groups, or of a mixture of different such monomers,
b) 0.1 60.2 wt.% of an ethylenically unsaturated monomer being copolymerizable with the components a), c) and d) and being different therefrom with at least one functional group being reactive with epoxide groups, or of a mixture of different such monomers,
c) 0 - 30 wt.% of an ethylenically unsaturated monomer being copolymerizable with the components a), b) and d) and being different therefrom with an alkyoxy group, or of a mixture of different such monomers,
d) 0 - 5 wt.% of an ethylenically unsaturated monomer being copolymerizable with the components a), b) and c) and being different therefrom with on average more than two functional groups being reactive with epoxide groups, which monomer is different from component b), or of a mixture of different such monomers,
e) 19.9 - 80 wt.% of a monomer with on average at least one epoxide group, in particular more than one, for instance on average at least two epoxide groups, or of a mixture of different such monomers,
f) 0 - 10 wt.% of an initiator for photopolymerization or of several different initiators for photopolymerization,
g) 0 - 10 wt.% of a catalyst for cross-linkage or of several different catalysts for cross-linkage, and
h) 0 - 15 wt.% additional substances,
the sum of the components a) to h) always being 100 wt.%,
is applied as a coating on a substrate and/or a contact surface of an add-on element, and B) optionally the components a) to d) of the coating obtained in step A) are photopolymerized by irradiation with light.

2. The adhesion promoting layer according to claim 1, wherein the preparation has a viscosity in the range from 10 to 2,000 mPa*s, preferably 100 to 1,000 mPa*s, in particular 300 to 700 mPa*s.

3. The adhesion promoting layer according to one of claims 1 or 2, wherein the preparation is applied by means of a printing technique, in particular offset printing, letterset printing, flexographic printing or photogravure printing, on the substrate and/or the contact surface of the add-on element, or wherein the adhesion promoting layer is wiped, coaled, poured as a film, panted or sprayed thereon.

4. The adhesion promoting layer according to one of claims 1 to 3, wherein the component e) is completely soluble in a mixture of the components a) to d).

5. The adhesion promoting layer according to one of claims 1 to 4, wherein the component h) is free from non-reactive organic solvents.

6. The adhesion promoting layer according to one of claims 1 to 5, wherein the liquid preparation consists of:
30 - 80 wt.%, in particular 50 - 80 wt.% component a),
0.1 - 40 wt.%, in particular 15 - 30 wt.% component b),
0 - 15 wt.%, in particular 0.1 - 15 wt.% component c),
0 - 1.0 wt.%, in particular 0.1, - 1.0 wt.% component d),
30 - 80 wt.%, in particular 30 - 50 wt.% component e),
0.1 - 6.0 wt.%, in particular 1.0 - 6.0 wt.% component f),
0.1 - 3.0 wt.%, in particular 0,5 - 3.0 wt.% component g),
0.1 - 10.0 wt.%, in particular 0.1 - 5.0 wt.% component h).

7. A method for making an adhesion promoting layer according to one of claims 1 to 6 comprising the following steps:
A) the components a) to h) are mixed with each other,
A1) the obtained mixture is homogenized,
A2) the homogenized mixture is applied as a coating on a substrate or a contact surface of an add-on element,
B) the coating is optionally exposed to a light radiation.

8. The method according to claim 7, wherein the steps A) and B) are carried out at a temperature in the range from -20 °C to 450 °C, in particular in the range from 0 °C to 30 °C, preferably in the range from 15 °C to 30 °C.

9. A method for connecting a substrate with an add-on element, wherein on a contact surface of the substrate and/or on a contact surface of the add-on element an adhesion promoting layer according to one of claims 1 to 6, including step B), is prepared, wherein the add-on element is placed with the contact surface of the add-on element in a flat manner on the contact surface of the substrate, and wherein the combination of substrate, adhesion promoting layer and add-on element is exposed to a cross-linkage temperature in the range from 80 °C to 250 °C for a time from 1 s to 6,000 s.

10. A method for connecting a substrate with an add-on element, wherein on a contact surface of the substrate and/or on a contact surface of the add-on element an adhesion promoting layer according to one of claims 1 to 6, without step B), is prepared, wherein the add-on element is placed with the contact surface of the add-on element in a flat manner on the contact surface of the substrate and is pressed thereagainst, and wherein the combination of substrate, adhesion promoting layer and add-on element is exposed to an irradiation with light, in particular an irradiation with UV radiation and with an irradiation intensity from 100 to 5,000 mW/cm², in particular from 100 to 1,000 mW/cm², preferably from 200 to 600 mW/cm², and to a simultaneous heating step of 30 °C to 80 °C, preferably 40 °C to 70 °C.

11. The method according to one of claims 9 or 10, wherein the contact surface of the add-on element also or exclusively carries an adhesion promoting layer according to one of claims 1 to 6.

12. The method according to one of claims 9 to 11, wherein the substrate is a substrate of a security and/or value document.

13. The method according to one of claims 9 to 12, wherein the add-on element is made of a polymeric material, wherein the add-on element preferably is a holographic data carrier, in particular a phase hologram of the volume type.

14. A combination of a substrate and an add-on element, wherein the add-on element is glued to the substrate by means of an optionally thermally treated adhesion promoting layer according to one of claims 1 to 6.

15. A monomer preparation consisting of
a) 19.9 - 80 wt.% of an ethylenically unsaturated monomer being copolymerizable with the components b), c) and d) and being different therefrom without a functional group being reactive with epoxide groups, or of a mixture of different such monomers
b) 0.1 - 60.2 wt.% of an ethylenically unsaturated monomer being copolymerizable with the components a), c) and d) and being different therefrom with at least one functional group being reactive with epoxide groups, or of a mixture of different such monomers,
c) 0 - 30 wt.% of an ethylenically unsaturated monomer being copolymerizable with the components a), b) and d) and being different therefrom with an alkyoxy group, or of a mixture of different such monomers,
d) 0 - 5 wt.% % of an ethylenically unsaturated monomer being copolymerizable with the components a), b) and c) and being different therefrom with on average more than two functional groups being reactive with epoxide groups, which monomer is different from component b), or of a mixture of different such monomers,
e) 19.9 - 80 wt.% of a monomer with on average at least one epoxide group, in particular more than one, for instance on overage at least two epoxide groups, or of a mixture of different such monomers,
f) 0 - 10 wt. % of an initiator for photopolymerization or of several different initiators for photopolymerization,
g) 0 - 10 wt. % of a catalyst for cross-linkage or of several different catalysts for cross-lineage, and
h) 0 - 15 wt.% additional substances,
the sum of the components a) to h) always being 100 wt.%.

## Revendications

1. Couche adhésive thermiquement réticulable, solide, qui peut être obtenue par ce que
A) une préparation liquide se composant de
a) 19,9 - 80 % en poids d'un monomère à insaturation èthylénique étant copolymérisable avec les composants b), c) et d) et étant différent de ceux-ci sans un groupe fonctionnel étant réactif avec des groupes époxydiques, ou d'un mélange de tels monomères différents,
b) 0,1 - 60,2 % en poids d'un monomère à insaturation éthylénique étant copolymérisable avec les composants a), c) et d) et étant différent de ceux-ci avec au moins un groupe fonctionnel étant réactif avec des groupes époxydiques, ou d'un mélange de tels monomères différents,
c) 0 - 30 % en poids d'un monomère à insaturation éthylénique étant copolymérisable avec les composants a), b) et d) et étant différent de ceux-ci avec un groupe alkyoxy, ou d'un mélange de tels monomères différents,
d) 0 - 5 % en poids d'un monomère à insaturation éthylénique étant copolymérisable avec les composants a), b) et c) et étant différent de ceux-ci avec en moyenne plus de deux groupes fonctionnels étant réactifs avec des groupes époxydiques, ledit monomère étant différent du composant b), ou d'un mélange de tels monomères différents,
e) 19,9 - 80 % en poids d'un monomère avec en moyenne au moins un groupe époxydique, en particulier plus d'un, par exemple en moyenne au moins deux groupes époxydiques, ou d'un mélange de tels monomères différents,
f) 0 - 10 % en poids d'un lanceur pour la photopolymérisation ou de plusieurs lanceurs différents pour la photopolymérisation,
g) 0 - 10 % en poids d'un catalyseur pour la réticulation ou de plusieurs catalyseurs différents pour la réticulation, et
h) 0 - 15 % en poids de substances additionnelles,
la somme des composants a) à h) étant toujours de 100 % en poids,
est appliqué comme couverture sur un substrat et/ou une surface de contact d'un élément imposé, et
B) optionnellement les composants a) à d) de la couverture obtenue dans l'étape A) sont photopolymérisés par irradiation avec de la lumière.

2. Couche adhésive selon la revendication 1, dans laquelle la préparation a une viscosité comprise dans la gamme de 10 à 2000 mPa*s, de préférence 100 à 1000 mPa*s, en particulier 300 à 700 mPa*s.

3. Couche adhésive selon une des revendications 1 ou 2, dans laquelle la préparation est appliquée au il moyen d'une technique d'impression, en particulier impression offset, impression letterset, impression flexographique ou impression par héliogravure, sur le substrat et/ou la surface de contact de l'élément imposé, ou dans laquelle la couche adhésive est raclée, couchée, coulée comme un film, peinte ou pulvérisée sur celui-ci ou celle-ci.

4. Couche adhésive selon une des revendications 1 à 3, dans laquelle le composant e) est complètement soluble dans un mélange des composants a) à d).

5. Couche adhésive selon une des revendications 1 à 4, dans laquelle le composant h) est exempt de solvants organiques non réactifs.

6. Couche adhésive selon une des revendications 1 à 5, dans laquelle la préparation liquide e consiste en:
30 - 80 en poids, en particulier 50 - 80 % en poids de composant a),
0,1 - 40 % en poids, en particulier 15 - 30 % en poids de composant b),
0 15 % en poids, en particulier 0,1 - 15 % en poids de composant c),
0 - 1,0 % en poids, en particulier 0,1 - 1,0 % en poids de composant d),
30 - 80 % en poids, en particulier 30 - 50 % en poids de composant o),
0,1 - 6,0 % en poids, en particulier 1,0 - 6,0 % en poids de composant f),
0,1 - 3,0 % en poids, en particulier 0,5 - 3,0 % en poids de composant g),
0,1 - 10,0 % en poids, en particulier 0,1 - 5,0 % en poids de composant h).

7. Procédé de production d'une couche adhésive selon une des revendications 1 à 6 comprenant les étapes suivantes:
A) les composants a) à h) sont mélangés l'un avec l'autre,
A1) le mélange obtenu est homogénéisé,
A2) le mélange homogénéisé est appliqué comme couverture sur un substrat et/ou une surface de contact d'un élément imposé,
B) optionnellement la ouverture est soumise à une radiation lumineuse.

8. Procédé selon la revendication 7, dans lequel les étapes A) et B) sont mises en oeuvre à une température comprise dans la gamme de -20 °C à +50 °C, en particulier comprise dans la gamme de 0 °C à 30 °C, de préférence comprise dans la gamme de 15 °C à 30 °C.

9. Procédé de liaison d'un substrat avec un élément imposé, dans lequel sur une surface de contact du substrat et/ou sur une surface de contact de l'élément imposé, une couche adhésive selon une des revendications 1 à 6, inclusivement l'étape B), est préparée, dans lequel l'élément imposé est mis en place avec la surface de contact de l'élément imposé d'une manière plate sur la surface de contact du substrat, et dans lequel la combinaison de substrat, couche adhésive et élément imposé est soumise à un température de réticulation comprise dans la gamme de 80 °C à 250 °C pendant un temps de 1 s à 6000 s.

10. Procédé de liaison d'un substrat avec un élément imposé, dans lequel sur une surface de contact du substrat et/ou sur une surface de contact de l'élément imposé, une couche adhésive selon une des revendications 1 à 6, sans l'étape B), est préparée, dans lequel l'élément imposé est mis en place avec la surface de contact de l'élément imposé d'une manière plate sur la surface de contact du substrat et est pressé contre celle-ci, et dans lequel la combinaison de substrat, couche adhésive et élément imposé est soumise à une irradiation avec de la lumière, en particulier à une irradiation avec des rayons UV et avec une intensité d'irradiation comprise dans la gamme de 100 à 5000 mW/cm², en particulier comprise dans la gamme de 100 à 1000 mW/cm², de préférence comprise dans la gamme de 200 à 600 mW/cm², et à un chauffage simultané à 30 °C à 80 °C, de préférence 40 °C à 70 °C.

11. Procédé selon une des revendications 9 ou 10, dans lequel la surface de contact de l'élément imposé aussi ou exclusivement porte une couche adhésive selon une des revendications 1 à 6.

12. Procédé selon une des revendications 9 à 11, dans lequel le substrat est un substrat d'un document de sécurité et/ou valeur.

13. Procédé selon une des revendications 9 à 12, dans lequel l'élément imposé est en un matériau polymérique, dans lequel l'élément imposé de préférence est un support de données holographique, en particulier un hologramme de phase du type volumique.

14. Combinaison d'un substrat et d'un élément imposé, dans laquelle l'élément imposé est collé au substrat au moyen d'une couche adhésive optionnellement thermiquement traitée selon une des revendications 1 à 6.

15. Préparation de monomère se composant de
a) 19,9 - 80 % en poids d'un monomère à insaturation éthylénique étant copolymérisable avec les composants b), c) et d) et étant différent de ceux-ci sans un groupe fonctionnel étant réactif avec des groupes époxydiques, ou d'un mélange de tels monomères différents
b) 0,1 - 60,2 % en poids d' un monomère à insaturation éthylénique étant copolymérisable avec les composants a), c) et d) et étant différent de ceux-ci avec au moins un groupe fonctionnel étant réactif avec des groupes époxydiques, ou d'un mélange de tels monomères différents,
c) 0 - 30 % en poids d'un monomère à insaturation éthylénique étant copolymérisable avec les composants a), b) et d) et étant différent de ceux-ci avec un groupe alkyoxy, ou d'un mélange de tels monomères différents,
d) 0 - 5 % en poids d'un monomère à in saturation éthylénique étant copolymérisable avec les composants a), b) et c) et étant différent de ceux-ci avec en moyenne plus de deux groupes fonctionnels étant réactifs avec des groupes époxydiques, ledit monomère étant différent du composant b), ou d'un mélange de tels monomères différents,
e) 19,9 - 80 % en ponds d'un monomère avec en moyenne au moins un groupe époxydique, en particulier plus d'un, par exemple en moyenne au moins deux groupes époxydiques, ou d'un mélange de tels monomères différents,
f) 0 - 10 % en poids d'un lanceur pour la photopolymérisation ou de plusieurs lanceurs différents pour la photopolymérisation,
g) 0 - 10 % en poids d'un catalyseur pour la réticulation ou de plusieurs catalyseurs différents pour la réticulation, et
h) 0 - 15 % en poids de substances additionnelles,
la somme des composantes a) à h) étant toujours de 100 % en poids.
